# EUROPEAN PATENT APPLICATION

(11) **EP 2 341 323 A1**
(43) Date of publication of application: **06.07.2011**
(21) Application number: 09275124.7
(22) Date of filing: 17.12.2009
(51) Int. Cl.: G01F 23/28

(54) **Sensors**

(71) Applicant: BAE Systems PLC, London SW1Y 5AD (GB)
(72) Inventor: The designation of the inventor has not yet been filed
(74) Representative: Thomas, Michael Andrew

(57) **Abstract**

A system and method of sensing in a system, the system comprising: a plurality of sensors (2, 4, 6, 8); and a processor (1); wherein each sensor (2, 4, 6, 8) has a resonant frequency dependent upon the value of a physical quantity being sensed by the sensors (2, 4, 6, 8); at least one of the sensors (2, 4, 6, 8) has a different resonant frequency from another of the sensors for a given value of the physical quantity; and the processor (1) is adapted to discriminate between the resonant frequencies of the sensors. Each sensor (2, 4, 6, 8) may be a fluid level sensor. Also, the range of fluid levels sensed by a first sensor (2) may be different to that sensed by a second sensor (4), wherein the first of the sensors (2) has a different resonant frequency to the second of the sensors (4).

## Description

### FIELD OF THE INVENTION

The present invention relates to sensors, and to systems comprising a plurality of sensors.

### BACKGROUND

The problem of accurately measuring the level of fuel in an aircraft fuel tank is known. Also, the phenomenon of aircraft being struck by lightning, i.e. a lightning strike, is known.

Typically, aircraft fuel level measuring systems require the implementation of electronic components within the aircraft fuel tank. However, the use of electronic components within the combustible atmosphere of an aircraft fuel tank is potentially hazardous. For example, a lightning strike on an aircraft could cause electrical components within the fuel tank to produce sparks. These sparks could cause the unwanted and dangerous ignition of fuel and/or fuel vapour in the aircraft fuel tank.

Separately from the problem of accurately measuring the level of fuel in an aircraft fuel tank, the problem of aircraft fuel contamination, for example with water or ice, is known. However, conventional systems for the detection of contaminants in aircraft fuel require direct analysis of the constituents of a sample of the aircraft fuel.

### SUMMARY OF THE INVENTION

In a first aspect the present invention provides a system comprising: a plurality of sensors; and a processor; wherein each sensor has a resonant frequency; the resonant frequency of each sensor is dependent upon the value of a physical quantity being sensed by the sensors; at least one of the sensors has a different resonant frequency from another of the sensors for a given value of the physical quantity; and the processor is adapted to discriminate between the resonant frequencies of the sensors.

Each sensor of the plurality of sensors may be a fluid level sensor.

The system may be arranged such that a range of fluid levels sensed by a first of the sensors is different to a range of fluid levels sensed by a second of the sensors, wherein the first of the sensors has a different resonant frequency to the second of the sensors.

The processor may be further adapted to identify a sensor that is partially immersed in fluid using the resonant frequency of that sensor.

The system may be implemented in a fluid level detection system, wherein the processor is further adapted to determine a fluid level using the resonant frequency of the sensor that is partially immersed in fluid.

The processor may be further adapted to identify a sensor that is completely immersed in a fluid using the resonant frequency of that sensor.

The processor may be further adapted to determine a value for the dielectric constant of the fluid using the resonant frequency of the sensor that is completely immersed in the fluid.

The processor may be further adapted to identify a sensor that is not immersed in a fluid to any extent using the resonant frequency of that sensor.

The processor may be further adapted to determine a value for the dielectric constant of a compound surrounding the sensor that is not immersed in a fluid to any extent using the resonant frequency of the sensor that is not immersed in a fluid to any extent.

The processor may be further adapted to correct the determined fluid level using one or more of the following: the determined dielectric constant of the fluid; the dielectric constant of a compound surrounding the sensor that is not immersed in a fluid to any extent.

In a further aspect the present invention provides a method of sensing a physical quantity in a system, the system comprising: a plurality of sensors; and a processor; wherein each sensor has a resonant frequency; the resonant frequency of each sensor is dependent upon the value of a physical quantity sensed by the sensors; at least one of the sensors has a different resonant frequency from another of the sensors for a given value of the physical quantity; the method comprising the step of: the processor discriminating between the resonant frequencies of the sensors.

Each sensor of the plurality of sensors may be a fluid level sensor.

In a further aspect the present invention provides a processor for operation in a system, the system comprising: a plurality of sensors, each sensor having a resonant frequency, the resonant frequency of each sensor being dependent upon the value of a physical quantity being sensed by the sensors, at least one of the sensors having a different resonant frequency from another of the sensors for a given value of the physical quantity; the processor being adapted to discriminate between the resonant frequencies of the sensors.

In a further aspect the present invention provides a computer program or plurality of computer programs arranged such that when executed by a computer system it/they cause the computer system to operate in accordance with the method of the above aspect.

In a further aspect the present invention provides a machine readable storage medium storing a computer program or at least one of the plurality of computer programs according to the above aspect.

### BRIEF DESCRIPTION OF THE DRAWINGS

Figure 1 is a schematic illustration of a fuel level measurement system according to a first embodiment of the present invention;
Figure 2 is a schematic illustration of a first fuel level sensor;
Figure 3 is a schematic illustration of a circuit equivalent to the first fuel level sensor;
Figure 4 is a schematic illustration of the equivalent circuits of a first, a second, a third and a fourth fuel level sensors implemented in a fuel level sensor array of the first embodiment;
Figure 5 is a schematic illustration of the first, second, third, and fourth fuel level sensors arranged as a vertically stacked array of sensors in the first embodiment;
Figure 6 is a schematic graph of the impedance experienced by a signal and determined by a processor in the first embodiment;
Figure 7 is a schematic illustration of the equivalent circuits of a first, a second, a third and a fourth fuel level sensors implemented in a fuel level sensor array of a second embodiment;
Figure 8, is a schematic illustration of the first, second, third, and fourth fuel level sensors arranged as a vertically stacked array of sensors in the second embodiment;
Figure 9 is a schematic graph of the impedance experienced by the signal determined by the processor in the second embodiment; and
Figure 10 is process flow chart showing certain steps of a fuel level sensor array calibration process.

### DETAILED DESCRIPTION

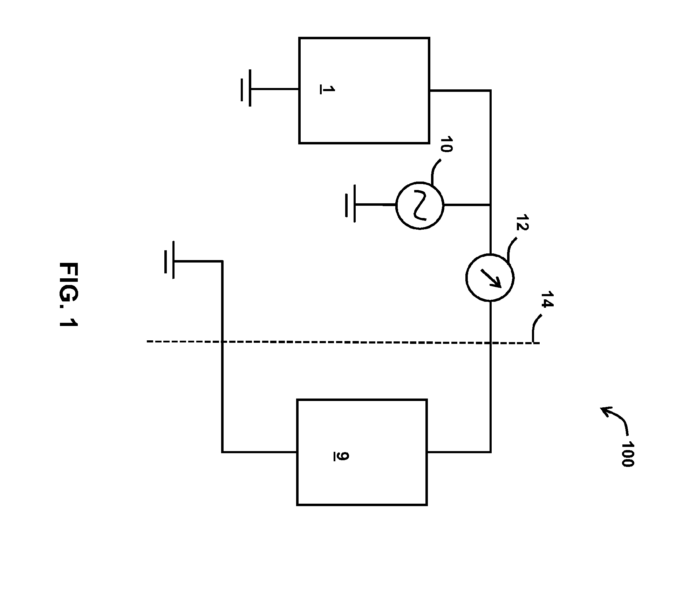

Figure 1 is a schematic illustration of a fuel level measurement system 100 according to a first embodiment of the present invention. The fuel level measurement system 100 comprises a processor 1, a voltage source 10, an ammeter 12, and a fuel level sensor array 9.

In this embodiment, the processor 1, the voltage supply 10, and the ammeter 12 are on an opposite side of an aircraft fuel tank bulkhead, hereinafter referred to as "the bulkhead 14" and indicated in Figure 1 by a dotted line, to the fuel level sensor array 9. The processor 1, the voltage supply 10, and the ammeter 12 are outside the aircraft fuel tank. The fuel level sensor array 9 is inside the aircraft fuel tank.

During operation, the voltage source 10 generates a signal. The signal is a sinusoidal signal having a certain specific frequency. During operation, the frequency of the signal is varied (swept) across a range of frequencies as described in more detail later below. The signal is sent from the voltage source 10 to the fuel level sensor array 9 via ammeter 12 and through the bulkhead 14.

The ammeter 12 measures the Root Mean Square (RMS) current of the signal in the fuel level measurement system 100.

The fuel level sensor array 9 modifies the impedance experienced by the signal depending on the level of fuel in the fuel tank, as described in more detail later below.

During operation, the processor 1 determines a value for a level of impedance experienced by the signal in the fuel level measurement system 100 using the values of the frequency of the signal generated by the voltage source 10 and the value of the current measured by the ammeter 12. Using the determined value of the impedance, the processor 1 determines a value for the level of fuel in the aircraft fuel tank, as described in more detail later below.

In this embodiment, the processor 1, the voltage supply 10, and the fuel level sensor array 9 are connected to a common ground.

In this embodiment, the fuel level sensor array 9 comprises four fuel level sensors, namely a first fuel level sensor, a second fuel level sensor, a third fuel level sensor, and a fourth fuel level sensor.

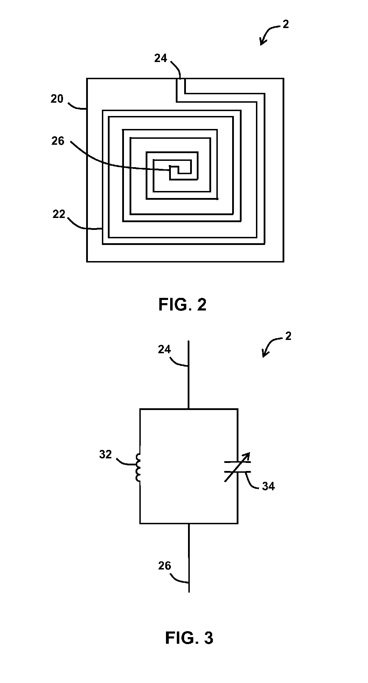

Figure 2 is a schematic illustration of the first fuel level sensor 2. Figure 2 shows a top surface of the first level sensor 2. The first fuel level sensor is a substantially lossless radio frequency (RF) transducer. In this embodiment, the first fuel level sensor 2 comprises a printed circuit board (PCB). The PCB comprises a substrate 20, a metal track 22, and a protective dielectric film (not shown for reasons of clarity).

The substrate 20 is a dielectric substrate, for example epoxy glass. A top surface of the substrate 2 is substantially square in shape, the edges of which are 0.18m in length. The substrate is 1.6 x10⁻³m thick.

The metal track 22 is disposed on the top surface substrate 20. The metal track 22 is 1x10⁻³m wide. The metal track 22 is made of copper. The metal track 22 forms an input connection 24 at one edge of the top surface of the substrate 20. The metal track 22 forms a square spiral from the input connection 24 at the edge of the top surface of the substrate 20, to an output connection 26. The output connection is positioned at the centre of the top surface of the substrate 20. The straight sides of the square spiral of the metal track 22 are parallel to the edges of the top surface of the substrate 20.

The protective dielectric film is disposed on top of the metal track 22 and the top surface of substrate 20.

The first fuel level sensor 2 has a certain level of capacitance. This capacitance is a result of gaps between adjacent turns of the spiral of the metal track 22. The turns of the spiral of the metal track 22 are separated by gaps comprising air, and the substrate material of the substrate layer 20. In this embodiment, the gaps are 1x10⁻³m wide.

Also, the first fuel level sensor 2 has a certain level of inductance. This inductance is a result of the spiral shape of the metal track 22.

As a result of the first fuel level sensor 2 having certain levels of both capacitance and inductance, the first fuel level sensor 2 can be conceptualised as a capacitor and an inductor, connected in parallel.

Figure 3 is a schematic illustration of a circuit equivalent to the first fuel level sensor 2. The circuit equivalent to the first fuel level sensor 2 is indicated by the same reference numeral as the first fuel level sensor 2. This convention is implemented in the remaining Figures.

The circuit equivalent to the first fuel level sensor 2 comprises a first inductor 32, having an inductance, and a first variable capacitor 34, having a capacitance.

The first fuel level sensor 2 has a number of resonant frequencies. The fundamental resonant frequency of the first fuel level sensor 2 is determined by, for example, the size of the gaps between successive turns of the spiral of the metal track, and the number of turns of the spiral. The first fuel level sensor 2 is manufactured to have a certain fundamental resonant frequency, for example a fundamental resonant frequency chosen depending on the application of the fuel level sensor array 9. In this embodiment, the fundamental resonant frequency of the first fuel level sensor 2 is chosen to be 60MHz.

During operation of the fuel level measurement system 100, the signal generated by the voltage source 10 is varied between 50MHz and 100MHz. The first fuel level sensor 2 has low impedance in this frequency range, unless the input signal has a frequency equal to the fundamental resonant frequency of the first fuel level sensor 2, in which case the first fuel level sensor 2 has high impedance. In other words, the first fuel level sensor 2 has high impedance to all input signals of frequency 50MHz - 100MHz, except those input signals of frequency 60MHz (the fundamental resonant frequency of the first fuel level sensor 2).

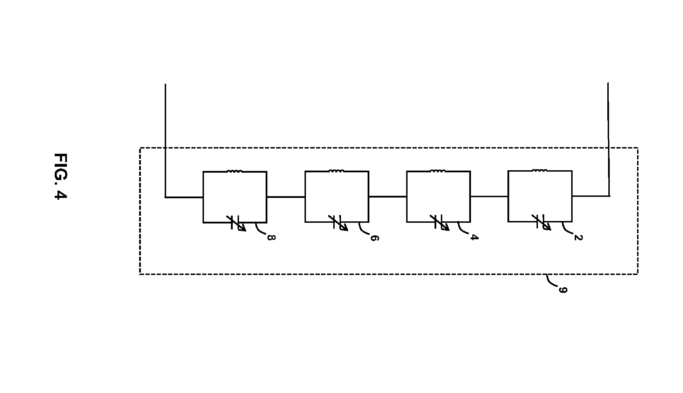

Figure 4 is a schematic illustration of the equivalent circuits of the first, second, third and fourth fuel level sensors implemented in the fuel level sensor array 9 of the first embodiment of the present invention.

In this embodiment, the first fuel level sensors 2, the second fuel level sensor 4, the third fuel level sensor 6, and the fourth fuel level sensor 8 are connected in series. The signal generated from the voltage supply 10 passes through the series connected fuel level sensors in the following order: the first fuel level sensors 2, the second fuel level sensor 4, the third fuel level sensor 6, the fourth fuel level sensor 8. The second fuel level sensor 4, the third fuel level sensor 6, and the fourth fuel level sensor 8 each have structures corresponding to that of the first fuel level sensor 2, as described above with reference to Figures 2 and 3. Consequently, the second, third, and fourth fuel level sensors 4, 6, 8 each have a respective fundamental resonant frequency. In this embodiment, the fundamental resonant frequency of the second fuel level sensor 4 is chosen to be 70MHz. The fundamental resonant frequency of the third fuel level sensor 6 is chosen to be 80MHz. The fundamental resonant frequency fourth fuel level sensor 8 is chosen to be 90MHz.

The second fuel level sensor 4 has low impedance in the frequency range 50MHz-100MHz, unless the input signal has a frequency equal to the fundamental resonant frequency of the second fuel level sensor 4 (70MHz), in which case the second fuel level sensor 4 has high impedance.

The third fuel level sensor 6 has low impedance in the frequency range 50MHz-100MHz, unless the input signal has a frequency equal to the fundamental resonant frequency of the third fuel level sensor 6 (80MHz), in which case the third fuel level sensor 6 has high impedance.

The fourth fuel level sensor 8 has low impedance in the frequency range 50MHz-100MHz, unless the input signal has a frequency equal to the fundamental resonant frequency of the fourth fuel level sensor 8 (90MHz), in which case the fourth fuel level sensor 8 has high impedance.

The values of the respective fundamental frequencies of the respective fuel level sensors 2, 4, 6, 8 are shifted depending on the extent to which the respective sensors are covered by a liquid, e.g. fuel. In this embodiment, the resonant frequency of the fundamental mode is reduced by 10% if the fuel sensor is completely submersed in fuel. For example, the first fuel level sensor 2 has a resonant frequency of 54MHz when completely submersed in fuel. The shift in the resonant frequency of the fundamental mode of a sensor is substantially linearly dependent on the coverage of the sensor with the fuel. For example, the first fuel level sensor 2 has a resonant frequency of 57MHz when half submersed in fuel, i.e. the resonant frequency is reduced by 5%.

An example implementation and operation of the fuel level measurement system 100 (described above with reference to Figure 1) comprising the first, second, third, and fourth fuel level sensors 2, 4, 6, 8 (described above with reference to Figure 2) will now be described.

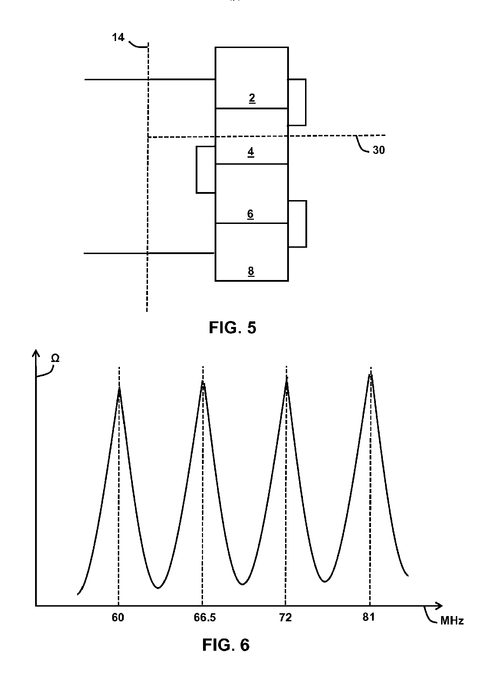

Figure 5 is a schematic illustration of the first, second, third, and fourth fuel level sensors 2, 4, 6, 8 arranged as a vertically stacked array of sensors.

The vertically stacked array of sensors is attached to a wall of an aircraft fuel tank.

In this embodiment, the first fuel level sensor 2 is positioned above the second fuel level sensor 4. The second fuel level sensor 4 is positioned above the third fuel level sensor 6. The third fuel level sensor 6 is positioned above the fourth fuel level sensor 8.

In this first embodiment, the fuel level sensors 2, 4, 6, 8 are electrically connected in series, as described above with reference to Figure 4.

Figure 5 further shows a fuel level 30, represented by a dotted line, below which liquid fuel is present, and above which fuel vapour is present. In this embodiment, fuel vapour is present above the fuel level 30 because the aircraft fuel tank is sealed from external air, and aircraft fuel is volatile. However, in other embodiments other compounds may be present above the fuel level, for example air. In this embodiment, the fuel level 30 intersects the second fuel level sensor about halfway up the surface of the second fuel level sensor 4.

During operation, the signal from the voltage supply 10 is received and modulated by each of the fuel level sensors of the fuel level sensor array 9, in turn, i.e. in the following order as described above: the first fuel level sensor 2, the second fuel level sensor 4, the third fuel level sensor 6, the fourth fuel level sensor 8. In this example, the signal supplied by the voltage supply 10 is a frequency sweeping signal that sweeps the frequency range 50MHz-100MHz.

The current in the fuel level measurement system 100 of the signal as its frequency is swept through the range 50MHz-100MHz is measured by the ammeter 12.

The processor 1 determines the impedance in the fuel level measurement system 100 of the signal as its frequency is swept through the range 50MHz-100MHz, using the measured current and the frequency of the supplied voltage.

Figure 6 is a schematic graph (not to scale) of the impedance experienced by the signal determined by the processor 1 in the first embodiment. The x-axis of the graph in Figure 4 is the frequency (MHz) of supplied signal. The y-axis of the graph of Figure 4 is the impedance (Ohms) of the fuel level sensor array 9. The level of impedance of the fuel level sensor array 9 for the signal is relatively low, apart from at the following frequency values: 60MHz, 66.5MHz, 72MHz, and 81 MHz, where the level of impedance is relatively high.

From this output signal 12, the processor 1 determines the following: the resonant frequency of the fourth fuel level sensor 8 has been reduced by 9MHz (i.e. 10%); the resonant frequency of the third fuel level sensor 6 has been reduced 8MHz (i.e. 10%); the resonant frequency of the second fuel level sensor 4 has been reduced by 3.5MHz (i.e. 5%); and the resonant frequency of the first fuel level sensor 2 has not been shifted. Thus, the processor 1 determines the following: the fourth fuel level sensor 8 is completely submersed in fuel; the third fuel level sensor 6 is completely submersed in fuel; the second fuel level sensor 4 is half submersed in fuel; and the first fuel level sensor 2 is not submersed in fuel to any extent. Using the relative positions of the fuel level sensors on the wall of the aircraft fuel tank, the processor 1 determines the level of fuel remaining in the aircraft fuel tank.

Thus, a fuel level sensor array 9 used to determine a level of fuel in a fuel tank, comprising fuel level sensors connected in series, is provided.

In a second embodiment, a fuel level sensor array 9 comprising fuel level sensors connected in parallel is implemented.

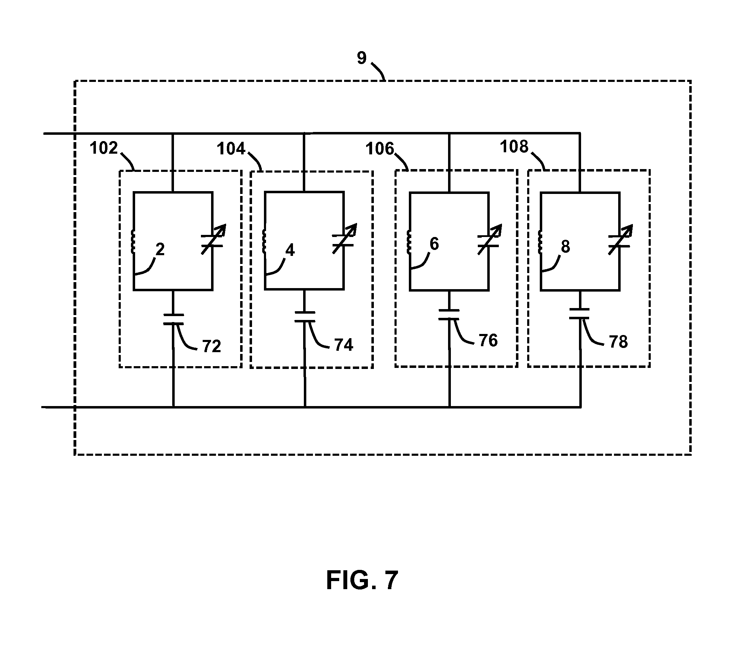

Figure 7 is a schematic illustration of the equivalent circuit of fuel level sensor array 9 according to the second embodiment of the present invention. The same elements as those implemented in the first embodiment are indicated by the same reference numerals.

In this embodiment, the fuel level sensor array 9 comprises a first fuel level sensor 2, a second fuel level sensor 4, a third fuel level sensor 6, a fourth fuel level sensor 8, a first capacitor 72, a second capacitor 74, a third capacitor 76, and a fourth capacitor 78. The first fuel level sensor 2 is connected in series with the first capacitor 72 to provide a first sensor unit 102. The second fuel level sensor 4 is connected in series with the second capacitor 74 to provide a second sensor unit 104. The third fuel level sensor 6 is connected in series with the third capacitor 76 to provide a third sensor unit 106. The fourth fuel level sensor 8 is connected in series with the fourth capacitor 78 to provide a fourth sensor unit 108. The first, second, third, and fourth sensor units 102, 104, 106, 108, are connected in parallel.

In this embodiment, the first, second, third, and fourth capacitors 72, 74, 76, 78 operate to reduce the effective respective fundamental resonant frequencies of the corresponding first, second, third, and fourth fuel level sensors 2, 4, 6, 8 to lie within the range 1MHz-10MHz. In this example, the first sensor unit 102, i.e. the series combination of the first capacitor 72 and the first fuel level sensor 2, has a fundamental resonant frequency of 2MHz. The second sensor unit 104, i.e. the series combination of the second capacitor 74 and the second fuel level sensor 4, has a fundamental resonant frequency of 4MHz. The third sensor unit 106, i.e. the series combination of the third capacitor 76 and the third fuel level sensor 6, has a fundamental resonant frequency of 6MHz. The fourth sensor unit 108, i.e. the series combination of the fourth capacitor 78 and the fourth fuel level sensor 8, has a fundamental resonant frequency of 8MHz.

In this embodiment, the signal supplied by the voltage supply 10 is a frequency sweeping signal that sweeps the frequency range 1MHz-10MHz.

The first sensor unit 102, i.e. the series combination of the first fuel level sensor 2 and the first capacitor 72, has high impedance in the frequency range 1MHz-10MHz, unless the input signal has a frequency equal to the fundamental resonant frequency of said series combination (2MHz), in which case said series combination has low impedance.

The second sensor unit 104, i.e. the series combination of the second fuel level sensor 4 and the second capacitor 74, has high impedance in the frequency range 1MHz-10MHz, unless the input signal has a frequency equal to the fundamental resonant frequency of said series combination (4MHz), in which case said series combination has low impedance.

The third sensor unit 106, i.e. the series combination of the third fuel level sensor 6 and the third capacitor 76, has high impedance in the frequency range 1MHz-10MHz, unless the input signal has a frequency equal to the fundamental resonant frequency of said series combination (6MHz), in which case said series combination has low impedance.

The fourth sensor unit 108, i.e. the series combination of the fourth fuel level sensor 8 and the fourth capacitor 78, has high impedance in the frequency range 1MHz-10MHz, unless the input signal has a frequency equal to the fundamental resonant frequency of said series combination (8MHz), in which case said series combination has low impedance.

During operation, the signal supplied by the voltage supply 10 is received by each of the sensor units 102, 104, 106, 108.

The current in the fuel level measurement system 100 of the signal as its frequency is swept through the range 1MHz-10MHz is measured by the ammeter 12.

The processor 1 determines the impedance in the fuel level measurement system 100 of the signal as its frequency is swept through the range 1MHz-10MHz, using the measured current and the frequency of the supplied voltage.

An example operation of the fuel level measurement system 100 comprising the fuel level sensor array of Figure 7 will now be described.

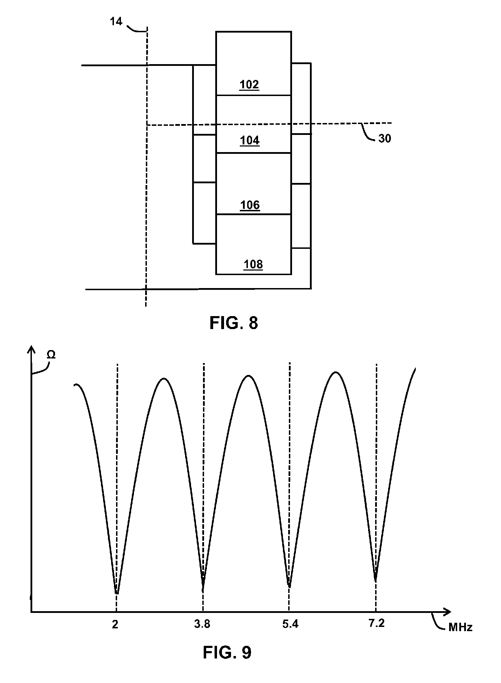

Figure 8, is a schematic illustration of the first, second, third, and fourth sensor units 102, 104, 106, 108 arranged as a vertically stacked array of sensor units. The vertically stacked array of sensor units is attached to a wall of an aircraft fuel tank. In this second embodiment, the sensor units 102, 104, 106, 108 are electrically connected in parallel, and each receives the signal supplied by the voltage supply 10.

In this embodiment, the first sensor unit 102 is positioned above the second sensor unit 104. The second sensor unit 104 is positioned above the third sensor unit 6. The third sensor unit 106 is positioned above the fourth sensor unit 108.

Figure 8 further shows a fuel level 30, represented by a dotted line, below which liquid fuel is present, and above which fuel vapour is present. In this embodiment, the fuel level 30 intersects the second sensor unit 104 about halfway up the surface of the second fuel level sensor 4.

During operation, each of the sensor units 102, 104, 106, 108 receives the signal. In this example, the input signal 10 is a frequency sweeping signal that sweeps the frequency range 1MHz-10MHz.

Figure 9 is a schematic graph (not to scale) of the impedance experienced by the signal determined by the processor 1 in the second embodiment. The x-axis of the graph in Figure 9 is the frequency (MHz) of supplied signal. The y-axis of the graph of Figure 9 is the impedance (Ohms) of the fuel level sensor array 9. The level of impedance of the fuel level sensor array 9 for the signal is relatively low, apart from at the following frequency values: 2MHz, 3.8MHz, 5.4MHz, and 7.2MHz, where the level of impedance is relatively high.

From this determined impedance level, the processor 1 determines the following: the resonant frequency of the fourth sensor unit 108 has been reduced by 0.8MHz (10%); the resonant frequency of the third sensor unit 106 has been reduced by 0.6MHz (10%); the resonant frequency of the second sensor unit 104 has been reduced by 0.2MHz (5%); the resonant frequency of the first sensor unit 102 has not been reduced. Thus, the processor 1 determines the following: the fourth fuel level sensor 8 is completely submersed in fuel; the third fuel level sensor 6 is completely submersed in fuel; the second fuel level sensor 4 is half submersed in fuel; and the first fuel level sensor 2 is not submersed in fuel to any extent. Using the relative positions of the fuel level sensors on the wall of the aircraft fuel tank, the processor 1 determines the level of fuel remaining in the aircraft fuel tank.

Thus, a fuel level sensor array 9 used to determine a level of fuel in a fuel tank, comprising fuel level sensors electrically connected in parallel, is provided.

An advantage provided by the above described embodiments is that only two connections, for example a single pair of wires, are required to penetrate the fuel tank bulkhead. This reduces the need for electronics within the fuel tank. Thus, this advantageously provides that the risks of sparks within the fuel tank, for example resulting from a lightning strike of an aircraft, tend to be reduced. Furthermore, due to the use of almost lossless transducers (e.g. the fuel level sensors 2, 4, 6, 8), low-power interrogation signals (e.g. the input signal 10) enable the use of transformer interfaces in place of the aforementioned connections that penetrate the bulkhead. This tends to avoid the need for electronics in the fuel tank.

A further advantage provided by the above described embodiments is that the fuel level measurement systems tend to be more immune to electromagnetic interference than conventional fuel measurement systems. This is because the fuel level sensors have defined frequency responses.

The fuel level sensors 2, 4, 6, 8 are planar sensors. In particular, in this embodiment the fuel level sensors 2, 4, 6, 8 are printed circuit boards (PCBs). Thus, the provided fuel level measurement systems tend to be low-cost compared to conventional measurement systems.

Moreover, the provided fuel measurement systems tend to be easy to install compared to conventional fuel level measurement systems. For example, the fuel level sensors 2, 4, 6, 8 of either of the above embodiments may be simply adhered to the rib of an aircraft wing in the aircraft fuel tank.

A further advantage provided by the above described embodiments is that the interrogation of the fuel level sensors using a multi-frequency signal tends to overcome issues of capacitance in the connecting wires.

Apparatus, including the processor 1, for implementing the above arrangement, and/or performing the method steps of an optional additional process of fuel level sensor array 9 calibration (described later below), may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

An optional additional process of fuel level sensor array 9 calibration can be implemented. This process of fuel level sensor array 9 calibration is as follows.

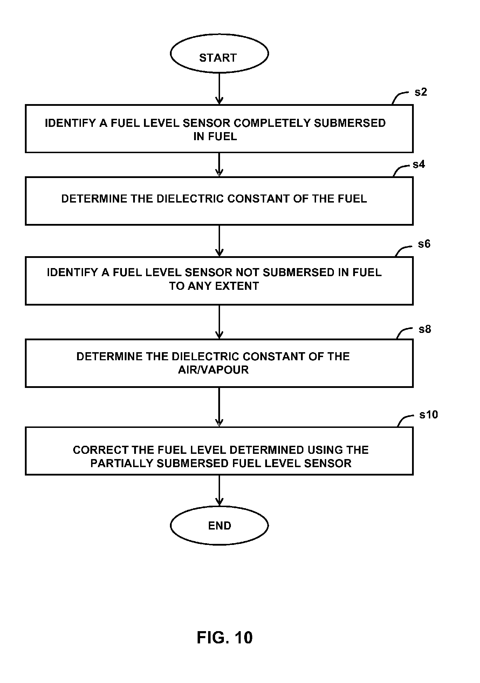

Figure 10 is process flow chart showing certain steps of a fuel level sensor array calibration process.

At step s2, a fuel level sensor that is completely submersed in fuel is identified by the processor 1. In this example the processor 1 identifies the fourth fuel level sensor 8 as completely submersed in fuel.

At step s4, the dielectric constant of fuel is determined. In this example the processor 1 determines the dielectric constant of the fuel surrounding the fourth fuel level sensor 8 using the determined fundamental resonant frequency/determined impedance of the fourth fuel level sensor 8, along with the knowledge that the fourth fuel level sensor 8 is completely submersed in fuel.

At step s6, a fuel level sensor that is not submersed in fuel to any extent is identified by the processor 1. In this example the processor 1 identifies the first fuel level sensor 2 as not submersed in fuel to any extent.

At step s8, the dielectric constant of air/vapour in the fuel tank is determined. In this example the processor 1 determines the dielectric constant of the air/vapour surrounding the first fuel level sensor 2 using the determined fundamental resonant frequency/determined impedance of the first fuel level sensor 2, along with the knowledge that the first fuel level sensor 2 is not submersed in fuel to any extent.

At step s10, the determined dielectric constant of the fuel and the determined dielectric constant of the air/vapour are used to update or correct the value of the fuel level (determined as described above using the determined fundamental resonant frequency/determined impedance of the partially submersed fuel level sensor).

In the above embodiment of a process of fuel level sensor array 9 calibration, both the dielectric constant of the fuel (steps s2-s4) and the dielectric constant of the air/vapour (steps s6-s8) are determined, and used to correct the value of the fuel level (step s10). However, in other embodiments only the dielectric constant of the fuel (steps s2-s4) is determined and used to correct the value of the fuel level (step s10). Also, in other embodiments only the dielectric constant of the air/vapour (steps s6-s8) is determined and used to correct the value of the fuel level (step s10).

An advantage of the above described process of fuel level sensor array 9 calibration is that a more accurate indication of fuel level tends to be provided. Furthermore, in other embodiments the determined value of the dielectric of the fuel can be used to determine a level of water contamination in the fuel. For example, the dielectric constant of water tends to be significantly higher than that of aircraft fuel. Thus, a determined dielectric constant for a fluid in an aircraft fuel tank that has a value that is significantly higher than a predetermined dielectric constant for an uncontaminated fuel would indicate a significant contamination of the fuel in the aircraft fuel tank with water.

A further advantage of the above described process of fuel level sensor array 9 calibration is that changes in the fuel dielectric constant, for example those caused by temperature, or the use of different types of fuel, tend to be incorporated into the determination of the fuel level.

In the above embodiments, four fuel level sensors (i.e. the first, second, third, and fourth fuel level sensors) are used to determine the fuel level. However, in other embodiments a different number of fuel level sensors are used. For example, in other embodiments, 10 -15 fuel level sensors are used.

In the above embodiments, the fuel level sensors are arranged as a vertically stacked array of sensors. However, in other embodiments the fuel array sensors are arranged differently. For example, in other embodiments fuel level sensors or sensor arrays are positioned at opposite ends of the aircraft fuel tank. This enables a determination of the aircraft pitch to be calculated, for example by comparing the measured fuel level at each end of the fuel tank. Thus, a more accurate value of the fuel level in the fuel tank can be determined.

In the above embodiments, the metal track of the fuel level sensors is 1x10⁻³m wide. Also, the metal track 22 is copper. Also, the gaps between the turns of the spiral of the metal track are 1x10⁻³m wide. However, in other embodiments the metal track of one or more fuel level sensors is of different appropriate width and/or material. Also, in other embodiments, the gaps between the turns of the spiral of the metal track of one or more fuel level sensors are of different appropriate width.

In the above embodiments, the fuel level sensors each comprise a spiral metal track. The spiral metal track provides the resonance property of the fuel level sensor. However, in other embodiments the resonance property of one or more fuel level sensors is provided by a different appropriate structure or configuration of structures. For example, in other embodiments resonance of a fuel level sensor is provided by a metal meander line disposed on the substrate, or a metal coil.

In the above embodiments, the fuel level sensors are substantially square in shape, the edges of which are 0.18m in length. However, in other embodiments one or more of the fuel level sensors is a different appropriate shape and/or size.

In the above embodiments, the resonant frequencies of the fundamental modes of the first, second, third, and fourth fuel level sensors are chosen to be 60MHz, 70MHz, 80MHz, and 90MHz respectively. However, in other embodiments different resonant frequencies for some or all of the fuel level sensors are chosen. In other embodiments, different resonant modes of one or more fuel level sensors are utilised.

In certain above embodiments, an additional capacitor 72, 74, 76, 78 is connected in series to each of the fuel level sensors such that the resonant frequencies of the resulting structures lie in the range 1 - 10MHz. This frequency range advantageously tends to enable distinction between water contamination and ice contamination of the fuel. However, in other embodiments, one or more additional different components are connected in series or parallel to one or more fuel level sensors such that a resonant frequency of the one or more resulting structures is altered to any appropriate value required by an application.

In certain above embodiments, the dielectric constant of the fuel is determined. This is used to determine a level of water-contamination of the aircraft fuel. However, in other embodiments, the dielectric constant of the fluid is used to determine the level of a different parameter.

In the above embodiments, the fuel level measurement system is configured as described above with reference to Figure 1. However, in other embodiments the fuel level measurement system is configured in a different appropriate way, and comprises the same or different elements that provide the functionality of the above described embodiments.

In the above embodiments, the signal is a sinusoidal signal having a certain specific frequency which is varied (swept) across a range of frequencies. However, in other embodiments a different appropriate input signal is used, for example a signal of chirped pulses.

In the above embodiments, a fuel level sensor array 9 comprising fuel level sensors having different resonant frequencies, is implemented in a system for measuring a fuel level in an aircraft fuel tank. However, in other embodiments different appropriate sensors having different resonant frequencies are used to measure a level of a different appropriate fluid. For example, in other embodiments, a sensor array comprising sensors having different resonant frequencies are used to determine a value of a different appropriate parameter, for example a value of a level of a different fluid, in a different system.

## Claims

1. A system comprising:
a plurality of sensors (2, 4, 6, 8); and
a processor (1); wherein
each sensor (2, 4, 6, 8) has a resonant frequency;
the resonant frequency of each sensor (2, 4, 6, 8) is dependent upon the value of a physical quantity being sensed by the sensors (2, 4, 6, 8);
at least one of the sensors (2, 4, 6, 8) has a different resonant frequency from another of the sensors for a given value of the physical quantity; and
the processor (1) is adapted to discriminate between the resonant frequencies of the sensors (2, 4, 6, 8).

2. A system according to claim 1, wherein each sensor (2, 4, 6, 8) of the plurality of sensors (2, 4, 6, 8) is a fluid level sensor.

3. A system according to claim 2, arranged such that a range of fluid levels sensed by a first of the sensors (2) is different to a range of fluid levels sensed by a second of the sensors (4), wherein the first of the sensors (2) has a different resonant frequency to the second of the sensors (4).

4. A system according to any of claims 2 to 3, wherein the processor (1) is further adapted to identify a sensor (2, 4, 6, 8) that is partially immersed in fluid using the resonant frequency of that sensor (2, 4, 6, 8).

5. A fluid level detection system comprising the system according to claim 4, wherein the processor (1) is further adapted to determine a fluid level using the resonant frequency of the sensor that is partially immersed in fluid.

6. A fluid level detection system according to any of claims 2 to 5, wherein the processor (1) is further adapted to identify a sensor (2, 4, 6, 8) that is completely immersed in a fluid using the resonant frequency of that sensor (2, 4, 6, 8).

7. A fluid level detection system according to claim 6, wherein the processor (1) is further adapted to determine a value for the dielectric constant of the fluid using the resonant frequency of the sensor that is completely immersed in the fluid.

8. A fluid level detection system according to any of claims 2 to 7, wherein the processor (1) is further adapted to identify a sensor (2, 4, 6, 8) that is not immersed in a fluid to any extent using the resonant frequency of that sensor (2, 4, 6, 8).

9. A fluid level detection system according to claim 8, wherein the processor (1) is further adapted to determine a value for the dielectric constant of a compound surrounding the sensor (2, 4, 6, 8) that is not immersed in a fluid to any extent using the resonant frequency of the sensor (2, 4, 6, 8) that is not immersed in a fluid to any extent.

10. A fluid level detection system according to any of claims 7 to 9, wherein the processor (1) is further adapted to correct the determined fluid level using one or more of the following: the determined dielectric constant of the fluid; the dielectric constant of a compound surrounding the sensor (2, 4, 6, 8) that is not immersed in a fluid to any extent.

11. A method of sensing a physical quantity in a system,
the system comprising:
a plurality of sensors (2, 4, 6, 8); and
a processor (1); wherein
each sensor (2, 4, 6, 8) has a resonant frequency;
the resonant frequency of each sensor (2, 4, 6, 8) is dependent upon the value of a physical quantity sensed by the sensors (2, 4, 6, 8);
at least one of the sensors (2, 4, 6, 8) has a different resonant frequency from another of the sensors for a given value of the physical quantity;
the method comprising the step of:
the processor (1) discriminating between the resonant frequencies of the sensors (2, 4, 6, 8).

12. A method according to claim 11 wherein each sensor of the plurality of sensors (2, 4, 6, 8) is a fluid level sensor.

13. A processor (1) for operation in a system, the system comprising: a plurality of sensors (2, 4, 6, 8), each sensor (2, 4, 6, 8) having a resonant frequency, the resonant frequency of each sensor (2, 4, 6, 8) being dependent upon the value of a physical quantity being sensed by the sensors (2, 4, 6, 8), at least one of the sensors (2, 4, 6, 8) having a different resonant frequency from another of the sensors (2, 4, 6, 8) for a given value of the physical quantity;
the processor (1) being adapted to discriminate between the resonant frequencies of the sensors (2, 4, 6, 8).

14. A computer program or plurality of computer programs arranged such that when executed by a computer system it/they cause the computer system to operate in accordance with the method of any of claims 11 to 12.

15. A machine readable storage medium storing a computer program or at least one of the plurality of computer programs according to claim 14.
